# EUROPÄISCHE PATENTANMELDUNG

(11) **EP 1 498 016 A1**
(43) Veröffentlichungstag der Anmeldung: **19.01.2005**
(21) Anmeldenummer: 04010405.1
(22) Anmeldetag: 03.05.2004
(51) Int. Cl.: A01B 1/00, A01C 5/02, A01B 1/14

(54) **Haltestiel für drehend zur Wirkung zu bringende Erdbodenbearbeitungselemente**

(30) Priorität: 12.07.2003 DE 20310763 U
(71) Anmelder: Sandholzer, Hartwig, 87474 Buchenberg (DE)
(72) Erfinder: Sandholzer, Hartwig, 87474 Buchenberg (DE)
(74) Vertreter: Wolf, Günter, Dipl.-Ing.

(57) **Zusammenfassung**

Die Erfindung betrifft Haltestiele für drehend zur Wirkung zu bringende Erdbodenbearbeitungselemente (1), wie Erdbohrer, Bodenauflockerungsgeräte, Pflanzlochstecher, Gabelspaten od.dgl., bestehend aus einem ersten Stielteil (2) mit Quergriff (3) und einem das Bodenbearbeitungswerkzeug (1) aufweisenden zweiten Stielteil (4), welche miteinander durch eine mit umlaufender Stellnut (5)für eine in diese eingreifenden Begrenzungszapfen (6)versehene Führungsstange (7) in Verbindung stehenden Stielteile (2,4) zueinander drehbar und begrenzt axial zueinander verstellbar und jeweils mit gegeneinander gerichteten, miteinander in Eingriff bringbaren, die Stielteile (2,4) ringförmig umgebend, sägezahnartigen Schrägverzahnungen (8,9) versehen sind.

Nach der Erfindung ist vorgesehen,
daß die beiden Schrägverzahnungen (8,9) durch von außen betätigbare Sperrelemente (10) in Eingriffs-oder Nichteingriffsstellung zueinander gegen Verdrehung blockierbar ausgebildet und die Sperrelemente (10) in Form einer Kugelsperre ausgebildet sind, wobei eine Kugel (11) zwischen einer an der Führungsstange (7) angeordneten, umlaufenden Innensicke (12), einer Durchgriffsöffnung (13) im zweiten Stielteil (4) und einem das betätigbare Sperrelement (10) bildender Sperrschieber (14) angeordnet ist, der mit einer auf die Kugel (11) einstellbaren, gegen die Kugel (11) offenen Kalotte (15) versehen ist.

## Beschreibung

Die Erfindung betrifft einen Haltestiel für drehend zur Wirkung zu bringende Erdbodenbearbeitungselemente, wie Erdbohrer, Bodenauflockerungsgeräte, Pflanzlochstecher, Gabelspaten mit gebogenen Zinken od.dgl., gemäß Oberbegriffen der unabhängigen Patentansprüche 1 und 4.

Haltestiele dieser Art sind nach dem DE-A-202 05 832.8 U1 bekannt. Mit solchen zweiteiligen Haltestielen kann das betreffende Bodenbearbeitungselement vom Quergriff aus drehend im Boden bewegt werden, wobei die drehende Mitnahme des unteren Stielteiles durch die im Eingriff stehenden Schrägverzahnungen bewirkt wird. Beim Zurückdrehen des Quergriffes kommen die Schrägverzahnungen außer Eingriff, so daß bei erneuter Drehung in entgegengesetzter Richtung eine erneute Mitnahmedrehung des Unterteiles und damit des Bodenbearbeitungselementes erfolgt.
Für die notwendige axiale und begrenzte Verstellbarkeit und zwar um geringfügig mehr als die Sägezahnhöhe sorgt die einleitend erwähnte, umlaufende Stellnut, in die von außen ein Sperrzapfen eingreift.

Eine bleibende Eingriffsstellung der beiden Schrägverzahnungen, die je nach Bodenbeschaffenheit oder je nach Eigenart des jeweilgen Bodenbearbeitungselementes wünschenswert sein kann ist mit einem Haltestiel der eingangs genannten Art nicht möglich, und der vorliegenden Erfindung liegt die Aufgabe zugrunde, einen Haltestiel der eingangs genannten Art dahingehend umzugestalten bzw. zu verbessern, daß ein solches Bodenbearbeitungsgerät auch so benutzbar ist, als handele es sich um ein Gerät mit einem in sich unverdrehbaren bzw. in sich starren Haltestiel, verbunden mit der Maßgabe einer einfachen und zugriffsgünstigen Umschaltbarkeit eines in sich starren auf einen in sich drehbaren Haltestieles und umgekehrt.

Diese Aufgabe ist mit einem Haltestiel der eingangs geannten Art nach der Erfindung durch die in den unabhängigen Patentansprüchen 1 und 4 angeführten Merkmale gelöst, die sich nur geringfügig voneinander unterscheiden.

Vorteilhafte Weiterbildungen ergeben sich nach den jeweiligen abhängigen Patentansprüchen.
Was die vorerwähnten geringfügigen Unterschiede betrifft, so beziehen sich diese letztlich nur auf die Art der axialen Kopplung des ersten und zweiten bzw. oberen und unteren Stielteiles, was sich im Einzelnen noch aus der speziellen Beschreibung ergiebt.

Durch diese erfindungsgemäßen Ausbildungen ist es denkbar einfach nur durch eine Verstellung bzw. Drehung des bzw. der kurz unterhalb des Quergriffes angeordneten Schiebers bzw. Hülse von einer Betriebsart auf die andere umzuschalten.

Die erfindungsgemäßen Haltestiele werden nachfolgend anhand der zeichnerischen Darstellung von Ausführungsbeispielen näher erläutert.

### Es zeigen

- Fig.1: schematisch und teilweise im Schnitt und in Ansicht den prinzipiellen Aufbau solcher Haltestiele;
- Fig.2: vergrößert und in Seitenansicht die ratschenartrig zum Eingriff zu bringenden Schrägverzahnungen;
- Fig.3 - 5: in Halbschnitten die Ausführungsform nach der ersten Art;
- Fig.6: perspektivisch und teilweise aufgebrochen die bevorzugte Ausführungsform nach der zweiten Art;
- Fig.7: stark vergrößert einen Teilabschnitt aus der Darstellung gemäß Fig.6 und
- Fig.8: perspektivisch eine bauliche Einzelheit.

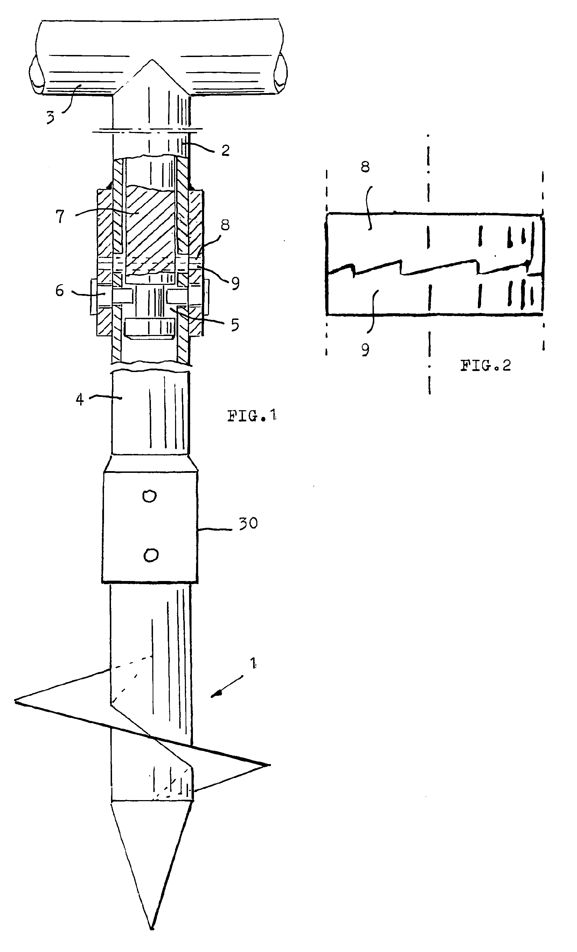

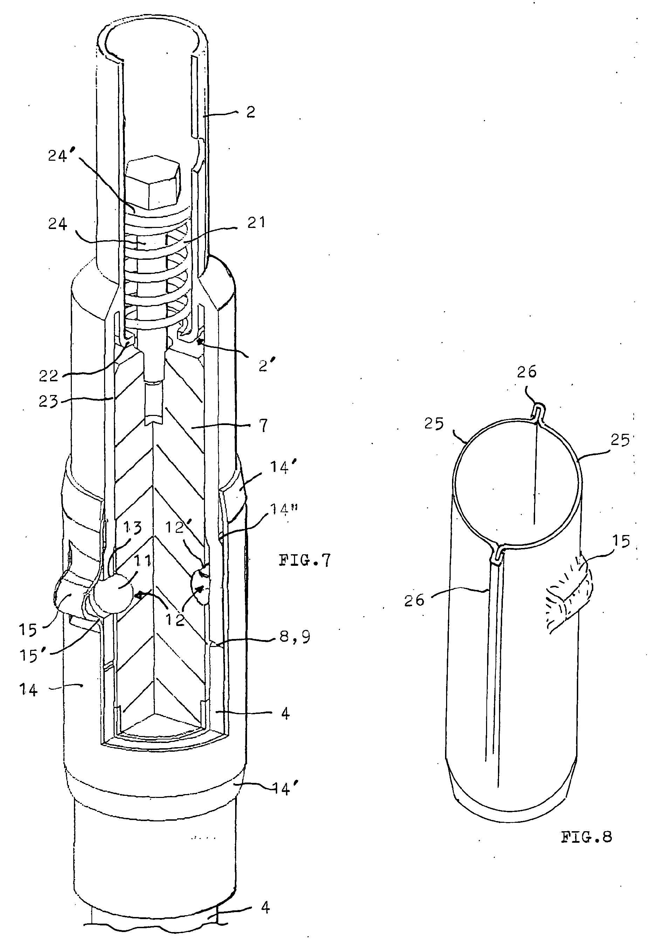

Obgleich Stand der Technik, sind die Fig.1, 2 vorangestellt, um das Nachfolgende mit besseren Verständnis lesen zu können.
Orientiert an diesen Fig.1, 2 besteht der Haltestiel aus einem ersten, oberen Stielteil 2 mit Quergriff 3 und einem das Bodenbearbeitungswerkzeug 1 aufweisenden zweiten, unteren Stielteil 4, welche miteinander durch eine mit umlaufender Stellnut 5 für eine in diese eingreifenden Begrenzungszapfen 6 versehene Führungsstange 7 in Verbindung stehenden Stielteile 2,4 zueinander drehbar und begrenzt axial zueinander verstellbar und jeweils mit gegeneinander gerichteten, miteinander in Eingriff bringbaren, die Stielteile 2,4 ringförmig umgebend, sägezahnartigen Schrägverzahnungen 8,9 (siehe Fig.2) versehen sind. Bis auf die Stellnut 5 und den Begrenzungszapfen 6 gilt dies auch für den erfindungsgemäßen Haltestiel nach der zweiten Art gemäß der Fig. 6 bis 8.

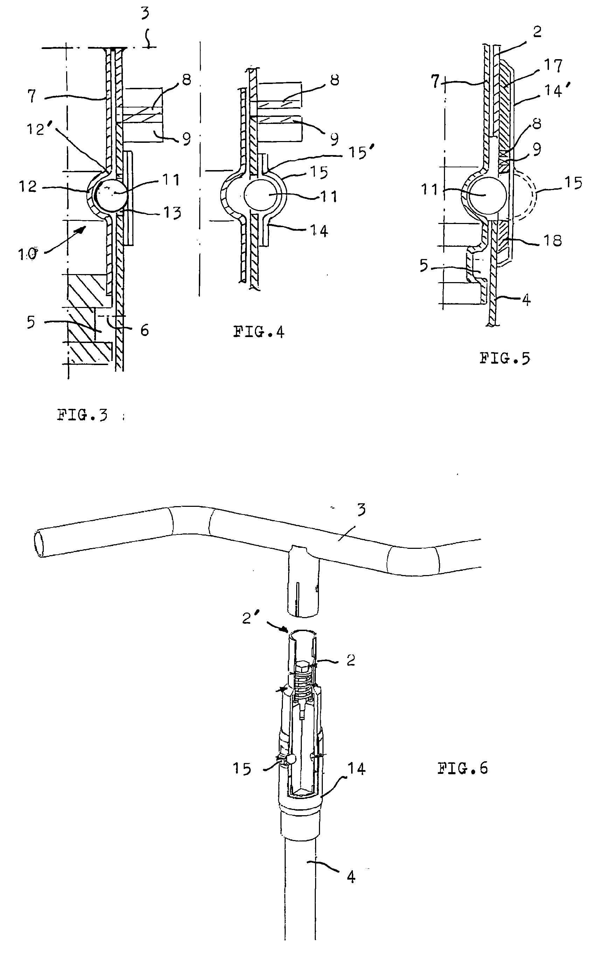

Für den Haltestiel nach der ersten Art und unter Verweis auf die Fig. 3 bis 5 ist für diesen wesentlich, daß die beiden Schrägverzahnungen 8,9 durch von außen betätigbare Sperrelemente 10 in Eingriffs- oder Nichteingriffsstellung zueinander gegen Verdrehung blockierbar ausgebildet und die Sperrelemente 10 in Form einer Kugelsperre ausgebildet sind. Dabei ist eine Kugel 11 zwischen einer an der Führungsstange 7 angeordneten, umlaufenden Innensicke 12, einer Durchgriffsöffnung 13 im zweiten Stielteil 4 und einem das betätigbare Sperrelement 10 bildender Sperrschieber 14 angeordnet, und der Sperrschieber 14 ist mit einer auf die Kugel 11 einstellbaren, gegen die Kugel 11 offenen Kalotte 15 versehen. Die Halbschnitte der Fig.3 bis 5 stellen die die Kugelsperre enthaltenden Hälften dar, die die Kugel 11 und die Kalotte 15 enthalten, wobei die Fig.3 die Sperrstellung verdeutlicht, in der die Kugel 11 vom Schieber 14 in der umlaufenden Innensicke 12 der hier als Rohr ausgebildeten Führungsstange 7 gehalten wird, die via Quergriff 3, wie schematisch angedeutet, mit dem ersten Stielteil 2 in fester Verbindung steht. Die Kalotte 15 befindet sich in Fig.3 außerhalb der Darstellungsebene, und die beiden Schrägverzahnungen 8,9 befinden sich im Eingriff.

Um mit dem Quergriff 3 ratschend verschwenken zu können, ist der Sperrschieber 14 mit seiner Kalotte 15 in Position über der bzw. neben die Kugel 11 zu bringen, die damit in die Kalotte 15 ausweichen kann, womit die Blockade zwischen den Stielteilen 2 und 4 aufgehoben ist. Die Kugel 11 ist dabei immer in der Durchgriffsöffnung 13 des unteren Stielteiles 4 geführt. Die notwendige Führung des Sperrschiebers 14 ist in den Fig.3,4 nicht besonders dargestell, zumal der Sperrschieber 14 unter Verweis auf Fig. 5 vorteilhaft in Form einer am Stielteil 4 drehbaren Sperrhülse 14' aus gebildet ist. Außerdem bilden bei dieser Ausführungsform die Schrägverzahnungen 8,9 die gegeneinander gerichteten Stirnflächen 16 zweier an den Stielteilen 2,4 fixierten Hülsen 17,18, wie dies auch schon in Fig.2 dargestellt ist.

Die bevorzugte Ausführungsform ist in den Fig. 6 bis 8 dargestellt, die andere axiale Arretierelemente 20 aufweist, d.h., diese weist keine umlaufende Stellnut 5 mit in diese einragenden Begrenzungszapfen 6 auf.

Für diese Ausführungsform ist in weitgehender Parallele zur vorbeschriebenen maßgebend, daß die beiden Schrägverzahnungen 8,9 durch von außen betätigbare Sperrelemente 10 in Eingriffsstellung zueinander gegen Verdrehung blockierbar ausgebildet und die Sperrelemente 10 ebenfalls in Form einer Kugelsperre ausgebildet sind, wobei mindestens eine Kugel 11 zwischen einer an der Führungsstange 7 angeordneten, umlaufenden Innensicke 12, einer Durchgriffsöffnung 13 im ersten Stielteil 2 und einer drehbaren Sperrhülse 14 angeordnet ist, die ebenfalls mit einer auf die Kugel 11 dreheinstellbaren, gegen die Kugel 11 offenen Kalotte 15 versehen ist.
Hierbei ist die fest mit dem unteren Stielteil 4 verbundene Führungsstange 7 mit dem oberen Stielteil 2 über eine am oberen Stielteil 2 abgestützte Druckfeder 21 gekoppelt, welche Feder 21 auch die Kugelsperre 10 unter eine realtiv schwache Spannung setzt, die beim Verstellen in der einen oder anderen Richtung auch merkbar zu überwinden ist.

In konkreter Ausführungsform und unter Verweis auf die vergrößerte Darstellung in Fig.7 ist dabei das erste Stielteil 2 an seinem Ende 2' mit einem Auflageringbund 22 für die Druck feder 21 versehen und mit diesem Ende 2' fest mit einer die Schrägverzahnung 8 aufweisenden Hülse 23 verbunden, in die die Führungsstange 7 eingreift. Außerdem ist die Führungsstange 7 mit einem Widerlagerzapfen 24 für das andere Ende der Druckfeder 21 versehen, wobei der Widerlagerzapfen 24 in Form einer in die Führungsstange 7 axial einschraubbaren mit Widerlagescheibe 24' versehenen Schraube, wie bspw. dargestellt, ausgebildet ist.

Die Druckfeder 21 ist dabei nicht verdrehgesichert zwischen dem Widerlager 22 und der Widerlagescheibe 24' angeordert, d.h., diese ist keiner bzw. keiner wesentlichen Torsionsbeanspruchung in Bezug auf die Haltestiellängsachse beim Ratschvorgang unterworfen.

Um einen zugriff zur Schraube bzw. den Widerlagerzapfen 24 zu haben, ist der Quergriff 3 am zum Quergriff hin offenen Stielteil 2 auf- oder einsteckbar und am Stielteil 2 in geeigneter Weise fixierbar ausgebildet, wie dies aus Fig.6 hervorgeht.

Eine weitere vorteilhafte Ausführungsform besteht unter Verweis auf Fig.7 darin, daß die Sperrhülse 14 mit eingebördelten Endrändern 14' versehen ist, die auf entsprechenden Schultern 14" der Stielteile 2,4 geführt ist, und unter Verweis auf Fig.8 ist die Sperrhülse 14 aus zwei halbzylindrischen Schalen 25 gebildet, die unter Ausbildung von achsparallelen Griffstegen 26 miteinander verbördelt sind.

Da die jeweilige Betriebsart des Haltestieles auch davon abhängig ist, welcher Art das damit zu betätigende Bodenbearbeitungswerkzeug 1 ist, also bspw. ein mit Schneidkante versehener Schneckengang (siehe bspw. Fig.1) zum Bohren von Bodenlöchern oder demgegenüber ein einfacher Pflanzlochstecher, für den in der Regel keine Mehrfachdrehung des Stieles erforderlich ist, besteht in diesem Zusammenhang eine vorteilhafte Ausführungsform des Haltestieles darin, daß das zweite, untere Stielteil 4 am seinem werkzeugseitigen Ende in Form einer Ein- oder Aufsteckaufnahme 30 (siehe Fig.1) für die wahlweise Anbringung unterschiedlicher Bodenbearbeitungswerkzeuge 1 ausgebildet ist.

Für beide Ausführungsformen und bezüglich der Gestaltung der Kugelsperre 10 ist im übrigen vorteilhaft vorgesehen, daß die Kalotte 15 mit angefasten Öffnungsrändern 15' und auch die umlaufende Innensicke 12 mit angefasten Umfangsrandkanten 12' versehen ist. Unter angefast sind dabei vorzugsweise abgerundete Ränder 15' bzw. Randkanten 12' zu verstehen, um die Passage der Kugel 11 aus der Innensicke 12 in die Kalotte 15 und zurück ohne etwaiges Haken bewirken zu können.

## Patentansprüche

1. Haltestiel für drehend zur Wirkung zu bringende Erdbodenbearbeitungselemente (1), wie Erdbohrer, Bodenauflockerungsgeräte, Pflanzlochstecher, Gabelspaten od.dgl., bestehend aus einem ersten Stielteil (2) mit Quergriff (3) und einem das Bodenbearbeitungswerkzeug (1) aufweisenden zweiten Stielteil (4), welche miteinander durch eine mit umlaufender Stellnut (5)für eine in diese eingreifenden Begrenzungszapfen (6) versehene Führungsstange (7) in Verbindung stehenden Stielteile (2,4) zueinander drehbar und begrenzt axial zueinander verstellbar und jeweils mit gegeneinander gerichteten, miteinander in Eingriff bringbaren, die Stielteile (2,4) ringförmig umgebend, sägezahnartigen Schrägverzahnungen (8,9) versehen sind,
**dadurch gekennzeichnet, daß** die beiden Schrägverzahnungen (8,9) durch von außen betätigbare Sperrelemente (10) in Eingriffs-oder Nichteingriffsstellung zueinander gegen Verdrehung blockierbar ausgebildet und die Sperrelemente (10) in Form einer Kugelsperre ausgebildet sind, wobei eine Kugel (11) zwischen einer an der Führungsstange (7) angeordneten, umlaufenden Innensicke (12), einer Durchgriffsöffnung (13) im zweiten Stielteil (4) und einem das betätigbare Sperrelement (10) bildender Sperrschieber (14) angeordnet ist, der mit einer auf die Kugel (11) einstellbaren, gegen die Kugel (11) offenen Kalotte (15) versehen ist.

2. Haltestiel nach Anspruch 1,
**dadurch gekennzeichnet, daß** der Sperrschieber (14) in Form einer am Stielteil (4) drehbaren Sperrhülse (14') ausgebildet ist.

3. Haltestiel nach Anspruch 1 oder 2,
**dadurch gekennzeichnet, daß** die Schrägverzahnungen (8,9) die gegeneinander gerichteten Stirnflächen (16) zweier an den Stielteilen (2,4) fixierten Hülsen (17,18) bilden.

4. Haltestiel für drehend zur Wirkung zu bringende Erdbodenbearbeitungselemente (1), wie Erdbohrer, Bodenauflockerungsgeräte, Pflanzlochstecher, Gabelspaten od.dgl., bestehend aus einem ersten Stielteil (2) mit Quergriff (3) und einem das Bodenbearbeitungswerkzeug (1) aufweisenden zweiten Stielteil (4), welche Stielteile (2,4) durch eine mit axial wirkenden Arretierelementen (20) versehen Führungsstange (7) in Verbindung stehen und zueinander drehbar und begrenzt axial zueinander verstellbar und jeweils mit gegeneinander gerichteten, miteinander in Eingriff bringbaren, die Stielteile (2,4) ringförmig umgebend, sägezahnartigen Schrägverzahnungen (8,9) versehen sind,
**dadurch gekennzeichnet, daß** die beiden Schrägverzahnungen (8,9) durch von außen betätigbare Sperrelemente (10) in Eingriffsstellung zueinander gegen Verdrehung blockierbar ausgebildet und die Sperrelemente (10) in Form einer Kugelsperre ausgebildet sind, wobei mindestens eine Kugel (11) zwischen einer an der Führungsstange (7) angeordneten, umlaufenden Innensicke (12), einer Durchgriffsöffnung (13) im ersten Stielteil (2) und einer drehbaren Sperrhülse (14) angeordnet ist, die mit einer auf die Kugel (11) dreheinstellbaren, gegen die Kugel (11) offenen Kalotte (15) versehen ist und daß die fest mit dem unteren Stielteil (4) verbundene Führungsstange (7) mit dem oberen Stielteil (2) über eine am oberen Stielteil (2) abgestützte Druckfeder (21) gekoppelt ist.

5. Haltestiel nach Anspruch 4,
**dadurch gekennzeichnet, daß** das erste Stielteil (2) an seinem Ende (2') mit einem Auflageringbund (22) für die Druckfeder (21) versehen und mit diesem Ende (2') fest mit einer die Schrägverzahnung (8) aufweisenden Hülse (23) verbunden ist, in die die Führungsstange (7) eingreift, und daß die Führungsstange (7) mit einem Widerlagerzapfen (24) für das andere Ende der Druckfeder (21) versehen ist.

6. Haltestiel nach Anspruch 5,
dadurchz **gekennzeichnet**, daß der Widerlagerzapfen (24) in Form einer in die Führungsstange (7) axial einschraubbaren Schraube ausgebildet und der Quergriff (3) am zum Quergriff hin offenen Stielteil (2) auf- oder einsteckbar ausgebildet und am Stielteil (2) fixierbar ausgebildet ist.

7. Haltestiel nach einem der Ansprüche 4 bis 6,
**dadurch gekennzeichnet, daß** die Sperrhülse (14) mit eingebördelten Endrändern (14') versehen ist, die auf entsprechenden Schultern (14") der Stielteile (2,4) geführt sind.

8. Haltestiel nach einem der Ansprüche 4 bis 7 und 2,
**dadurch gekennzeichnet, daß** die Sperrhülse (14) aus zwei halbzylindrischen Schalen (25) gebildet ist, die unter Ausbildung von achsparallelen Griffstegen (26) miteinander verbördelt sind.

9. Haltestiel nach einem der Ansprüche 1 bis 8,
**dadurch gekennzeichnet, daß** zweite, untere Stielteil (4) in Form einer Ein- oder Aufsteckaufnahme (30) für die wahlweise Anbringung unterschiedlicher Bodenbearbeitungswerkzeuge (1) ausgebildet ist.

10. Haltestiel nach einem der Ansprüche 1 bis 9,
**dadurch gekennzeichnet, daß** die Kalotte (15) mit angefasten Öffnungsrändern (15') und auch die umlaufende Innensicke (12) mit angefasten Umfangsrandkanten (12') versehen ist.
